# EUROPEAN PATENT APPLICATION

(11) **EP 3 450 794 A1**
(43) Date of publication of application: **06.03.2019**
(21) Application number: 17789375.7
(22) Date of filing: 19.04.2017
(51) Int. Cl.: F16F 9/32

(54) **SHOCK ABSORBER**

(30) Priority: 25.04.2016 JP 2016086738
(71) Applicant: KYB Corporation, Tokyo 105-6111 (JP)
(72) Inventor: SAKUTA, Atsushi, Tokyo 105-6111 (JP); HAGIDAIRA, Shinichi, Tokyo 105-6111 (JP); GOMI, Ryouta, Tokyo 105-6111 (JP)
(74) Representative: MFG Patentanwälte Meyer-Wildhagen Meggle-Freund Gerhard PartG mbB
(86) International application number: PCT/JP2017/015731
(87) International publication number: WO 2017/188090

(57) **Abstract**

A shock absorber includes a cap (1) which covers a joint portion between a piston connection member (2) connecting an outer circumference of a rod (12) to a piston (11) and is attached to the outer circumference of the rod (12) and the piston connection member (2) without a gap.

## Description

### Technical Field

The present invention relates to a shock absorber.

### Background Art

A shock absorber is interposed between a vehicle body and a vehicle wheel of a vehicle and suppresses a shaking of the vehicle body by damping a vibration input to a vehicle wheel.

In general, the shock absorber includes a cylinder, a tubular rod which is inserted into the cylinder to be movable in an axial direction, and a piston which is connected to a front end of the rod and defines two chambers inside the cylinder, the piston is provided with a passage which communicates the two chambers with each other and is provided with a valve which gives a resistance to a liquid passing through the passage.

Incidentally, in a case in which the piston portion has a valve with a complex structure, for example, a damping force adjustment valve as disclosed in JP 2015-72047 (A), when the damping force adjustment valve is directly assembled to the rod at the time of assembling the shock absorber, the assembling operation become complex. For that reason, in the conventional shock absorber, the front end of the rod is provided with a tubular housing which is a piston connection member and the shock absorber is assembled so that the separate damping force adjustment valve is accommodated in the housing.

Further, the housing includes a threaded portion formed on an outer circumference on the rod side and the threaded portion is threaded to the inner circumference of the rod.

When the vehicle wheel is positioned to the vehicle body by an upper arm and a lower arm, such a shock absorber receives a lateral force generated during the turning of the vehicle by the upper arm and the lower arm and hence a large lateral force is not applied to the shock absorber.

However, when the shock absorber is used as a strut type suspension, the vehicle wheel is positioned by the shock absorber and hence a large lateral force is applied to the shock absorber during the turning of the vehicle. Then, since the large lateral force may be applied to the threaded portion between the rod and the housing so that the threaded portion is loosened, it is not desirable to thread the rod into the housing at the time of using the shock absorber as the strut type suspension.

Here, when such a shock absorber is used as the strut type suspension, the rod of the shock absorber and the housing are welded to each other by friction welding.

### Summary of the Invention

However, when the rod and the housing are welded to each other by friction welding as described above, an oxide scale which is a coating of oxide is formed on the surface of the heated rod or housing. Then, when the oxide scale is mixed in the oil of the shock absorber, contamination occurs and hence the contaminant is bitten into a gap of a valve such as a leaf valve. As a result, there is a problem in that an aimed damping force cannot be obtained.

Here, an object of the invention is to prevent the mixing of an oxide scale by subjecting a rod and a housing to friction welding.

In order to solve the above-described problems, the invention includes a cap which covers a joint portion between an outer circumference of a rod and a piston connection member and is attached to the outer circumference of the rod and the piston connection member without a gap.

### Brief Description of Drawings

Fig. 1 is a longitudinal sectional view of a shock absorber according to a first embodiment.
Fig. 2 is an enlarged cross-sectional view illustrating a main part of a first modified example of the shock absorber according to the first embodiment.
Fig. 3 is an enlarged cross-sectional view illustrating a main part of a second modified example of the shock absorber according to the first embodiment.
Fig. 4 is a circuit diagram of a damping valve used in the shock absorber of Fig. 1.
Fig. 5 is an enlarged longitudinal sectional view illustrating a main part of a shock absorber according to a second embodiment.

### Description of Embodiments

Hereinafter, embodiments will be described with reference to the drawings . The same reference numerals assigned in several drawings indicate the same or corresponding components.

### <First Embodiment>

A shock absorber D1 according to the embodiment includes a cylinder 10 which is filled with a liquid such as hydraulic oil, a piston 11 which is slidably inserted into an inner circumference of the cylinder 10 to define an extension side chamber R1 and a compression side chamber R2 inside the cylinder, and a rod 12 which is movably inserted into the cylinder 10 and the rod 12 and the piston 11 are connected to each other through a piston connection member.

In this example, the piston 11 is provided with a damping valve V capable of adjusting a damping force of the shock absorber D1 to be described later.

Here, in the shock absorber D1 according to the embodiment, a bottomed tubular housing 2 is provided as a piston connection member and the housing 2 accommodates the damping valve V while a bottom portion 2b is welded to the front end of the rod 12 by friction welding.

Specifically, the housing 2 includes a tube portion 2a which is a bottomed tube and accommodates the damping valve V therein, a bottom portion 2b which is provided at a rod side end of the tube portion 2a, and an annular convex portion 2c which is formed at an outer peripheral end of the bottom portion 2b.

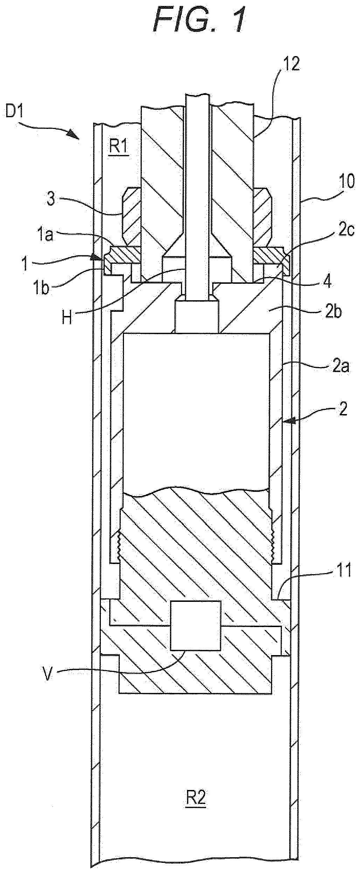

Then, the front end of the rod 12 is welded to a surface between the bottom portion 2b and the annular convex portion 2c of the housing 2 by friction welding. Further, the inner circumference of the lower end of the tube portion 2a of the housing 2 in Fig. 1 is provided with a threaded portion to be threaded to the damping valve V and the damping valve V is threaded to the inner circumference of the housing 2.

Further, although not illustrated in the drawings, an annular rod guide is attached to the upper end of the cylinder 10 and axially supports the rod 12.

Additionally, an annular rebound cushion 3 which is formed of soft rubber such as NBR and synthetic rubber is attached to the outer circumference of the rod 12 and an annular rebound stopper 1 for placing the rebound cushion 3 is attached to the annular convex portion 2c of the housing 2.

Then, in the shock absorber D1, the rebound cushion 3 is elastically deformed between the rod guide and the rebound stopper 1 to reduce a shock during an extension when extending the rod 12. At this time, the rebound stopper 1 regulates the stroke amount during the extension of the shock absorber D1 by the height of the rebound stopper 1 in the axial direction.

Further, the rebound stopper 1 is formed of resin and includes, as illustrated in Fig. 1, a small diameter tube portion 1a which has substantially the same inner diameter as the outer diameter of the rod 12 and a large diameter tube portion 1b which is connected to the small diameter tube portion 1a and has substantially the same inner diameter as the outer diameter of the annular convex portion 2c of the housing 2.

Then, the rebound stopper 1 is press-fitted to the rod 12 and the housing 2 while the large diameter tube portion 1b is brought into contact with the outer circumference of the annular convex portion 2c of the housing 2 and the small diameter tube portion 1a is brought into contact with the outer circumference of the rod 12. Accordingly, the rebound stopper 1 also serves as a cap which is attached to the rod 12 and the housing 2 without a gap, covers a joint portion 4 between the rod 12 and the housing 2, and isolates the joint portion 4 from the extension side chamber R1.

Additionally, in the embodiment, although the rebound stopper 1 serves as a cap, a cap may be provided which is attached to the rod 12 and the housing 2 without a gap separately from the rebound stopper 1 on which the rebound cushion 3 is placed so that the joint portion 4 between the rod 12 and the housing 2 is isolated from the extension side chamber R1. However, in the embodiment, since the rebound stopper 1 also serves as a cap, an increase in the number of components can be prevented.

Additionally, since the rebound stopper 1 having a cap function may be attached to the outer circumference of the rod 12 and the housing 2 without a gap, the shape of the rebound stopper 1 is not limited to the above-described shape.

In the embodiment, the rebound stopper 1 serving as a cap is attached to the outer circumference of the rod 12 and the housing 2 corresponding to the piston connection member without a gap and covers the joint portion 4 between the rod 12 and the housing 2. According to this configuration, since the joint portion 4 is isolated from the extension side chamber R1 by the rebound stopper 1, an oxide scale generated by the joint portion 4 when the rod 12 and the housing 2 are welded to each other by friction welding is confined in a space surrounded by the housing 2, the outer circumference of the rod 12, and the rebound stopper 1. Accordingly, it is possible to prevent contamination mixed in the oil of the shock absorber D1.

Additionally, an oxide scale is also generated on the inner circumference side of the rod 12 in the joint portion 4 between the rod 12 and the housing 2. However, since the inner circumference side communicates with the extension side chamber R1 or the compression side chamber R2, there is no concern that the oxide scale generated on the inner circumference side of the rod 12 is mixed in the oil of the shock absorber D1 to cause contamination.

Further, in the embodiment, the piston connection member is formed as the tubular housing 2, but the piston connection member mentioned herein is a member that connects the rod 12 and the piston 11 to each other and is not particularly limited to the housing 2.

Further, the rebound stopper 1 according to the embodiment is formed of resin and is attached to the rod 12 and the housing 2 corresponding to the piston connection member in a press-inserted state. According to this configuration, since the rebound stopper 1 is elastic, when the rod 12 and the housing 2 are press-inserted into the rebound stopper 1, the rebound stopper 1 clamps the outer circumference of the rod 12 and the housing 2 without a gap. Here, as the resin forming the rebound stopper 1, for example, synthetic resin or rubber can be used.

Additionally, when the rebound stopper 1 is attached to the outer circumference of the rod 12 and the housing 2 without a gap even when the rebound stopper 1 is formed of metal, the joint portion 4 between the rod 12 and the housing 2 serves as a cap isolated from the extension side chamber R1. However, when the cap is formed of metal in this configuration, there is concern that the cap may damage the outer circumference of the rod. For this reason, it is desirable to form the cap of resin which does not damage the outer circumference of the rod 12 even when the outer circumference of the rod 12 is clamped.

Further, in the embodiment, the rebound stopper 1 is attached to the outer circumference of the rod 12 and the housing 2 without a gap while the small diameter tube portion 1a of the rebound stopper 1 is brought into contact with the outer circumference of the rod 12 and the large diameter tube portion 1b of the rebound stopper 1 is brought into contact with the outer circumference of the annular convex portion 2c of the housing 2.

Here, the method of attaching the rebound stopper 1 is not limited to the above-described method as long as the rebound stopper 1 is attached to the outer circumference of the rod 12 and the housing 2 without a gap when the joint portion 4 between the rod 12 and the housing 2 is isolated from the extension side chamber R1.

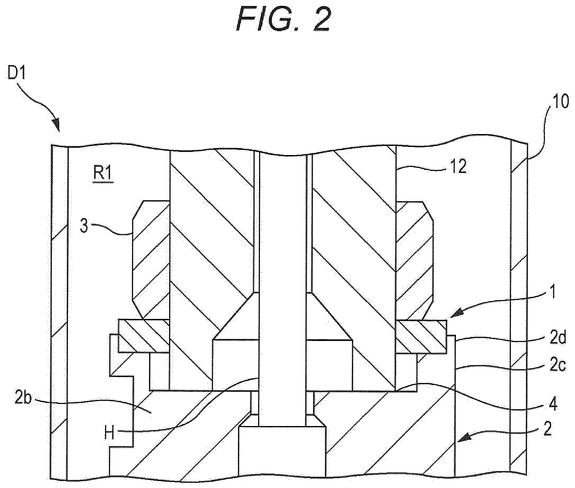

For example, as illustrated in Fig. 2, the outer circumference end of the annular convex portion 2c may be further provided with the annular protrusion 2d, the annular rebound stopper 1 may be fitted between the annular protrusion 2d and the outer circumference of the rod 12 to attach the rebound stopper 1, and the joint portion 4 between the rod 12 and the housing 2 may be isolated from the extension side chamber R1.

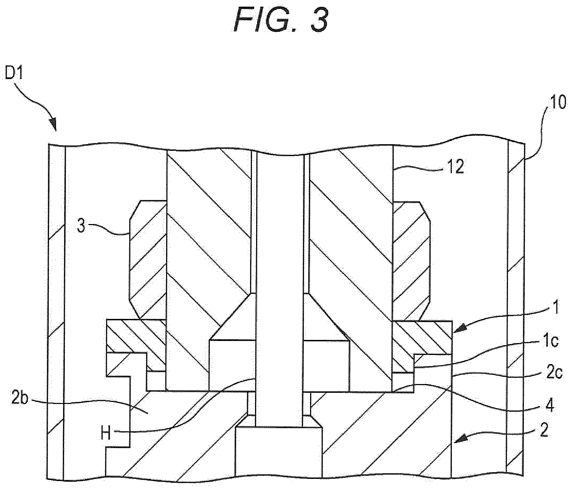

Alternatively, as illustrated in Fig. 3, the lower end of the inner circumference of the rebound stopper 1 maybe provided with the annular protrusion 1c straightly extending toward the housing 2, the annular protrusion 1c may be fitted between the annular convex portion 2c of the housing 2 and the outer circumference of the rod 12 to attach the rebound stopper 1, and the joint portion 4 between the rod 12 and the housing 2 may be isolated from the extension side chamber R1.

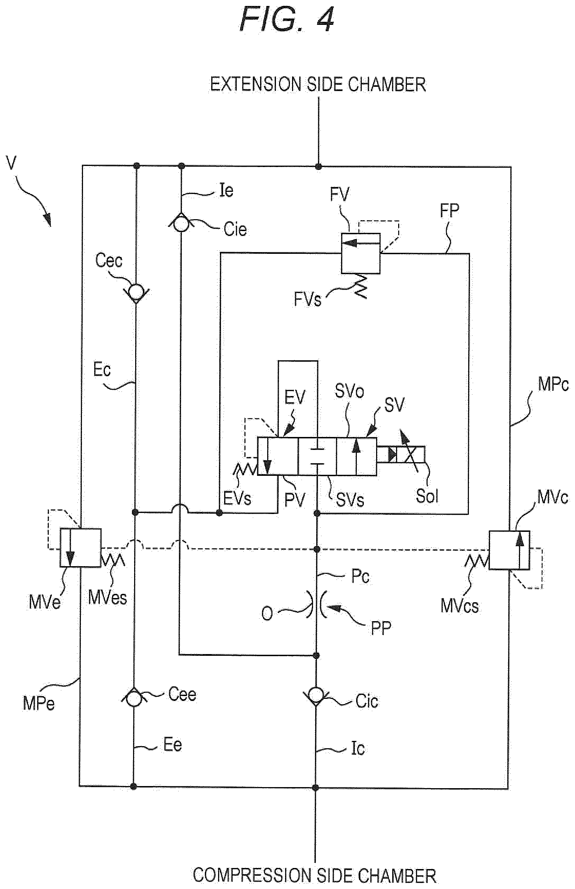

Further, in this example, the piston 11 is provided with the damping valve V capable of adjusting the damping force during the extension and compression of the shock absorber D1. Specifically, as indicated by a circuit diagram of Fig. 4, the damping valve V includes an extension side passage MPe and a compression side passage MPc which communicate the extension side chamber R1 and the compression side chamber R2 provided in the piston 11, an extension side main valve MVe which is provided in the extension side passage MPe and gives a resistance to the passing hydraulic oil, a compression side main valve MVc which is provided in the compression side passage MPc and gives a resistance to the passing hydraulic oil, a pressure control passage PP which has a throttle O provided in the course thereof, decreases a pressure on the upstream side of the extension side passage MPe or the compression side passage MPc, and guides a back pressure of urging the extension side main valve MVe and the compression side main valve MVc in a closing direction, an electromagnetic valve EV which includes a pressure control valve PV provided on the downstream side of the throttle O of the pressure control passage PP and controlling the back pressure and an opening and closing valve SV integrated with the pressure control valve PV and opening and closing the pressure control passage PP and is controlled by a single solenoid Sol, a fail passage FP which is branched from the downstream of the throttle O of the pressure control passage PP and bypasses the electromagnetic valve EV, and a fail valve FV which is provided in the course of the fail passage FP and is opened at a predetermined pressure.

As illustrated in Fig. 4, in this case, the pressure control passage PP includes an extension side pressure introduction passage Ie and a compression side pressure discharge passage Ec which are connected to the extension side chamber R1, a compression side pressure introduction passage Ic and an extension side pressure discharge passage Ee which are connected to the compression side chamber R2, and an adjustment passage Pc of which one end is connected to the extension side pressure introduction passage Ie and the compression side pressure introduction passage Ic and the other end is connected to the extension side pressure discharge passage Ee and the compression side pressure discharge passage Ec.

A check valve Cie which allows only the flow of the hydraulic oil from the extension side chamber R1 to the adjustment passage Pc is provided in the course of the extension side pressure introduction passage Ie and a check valve Cic which allows only the flow of the hydraulic oil from the compression side chamber R2 to the adjustment passage Pc is provided in the course of the compression side pressure introduction passage Ic. Further, a check valve Cee which allows only the flow of the hydraulic oil from the adjustment passage Pc to the compression side chamber R2 is provided in the course of the extension side pressure discharge passage Ee and a check valve Cec which allows only the flow of the hydraulic oil from the adjustment passage Pc to the extension side chamber R1 is provided in the course of the compression side pressure discharge passage Ec.

Thus, since the extension side chamber R1 is compressed when the shock absorber D1 is extended, the hydraulic oil opens the check valve Cie and flows to the adjustment passage Pc through the extension side pressure introduction passage Ie. Further, since the check valve Cee is opened, the hydraulic oil moves to the compression side chamber R2 through the extension side pressure discharge passage Ee. In contrast, since the compression side chamber R2 is compressed when the shock absorber D1 is compressed, the hydraulic oil opens the check valve Cic and flows to the adjustment passage Pc through the compression side pressure introduction passage Ic. Further, since the check valve Cec is opened, the hydraulic oil moves to the extension side chamber R1 through the compression side pressure discharge passage Ec. That is, even when the shock absorber D1 is extended or compressed, the hydraulic oil flows in the adjustment passage Pc in one direction at all times while the position on the side of the introduction passages Ie and Ic is set as an upstream side and the position on the side of the discharge passages Ee and Ec is set as a downstream side.

The adjustment passage Pc is sequentially provided with the throttle O and the electromagnetic valve EV including the opening and closing valve SV and the pressure control valve PV from the upstream side.

The pressure control valve PV is provided in the course of the pressure control passage PP and in the pressure control valve PV, a pressure on the downstream side of the throttle O of the pressure control passage PP and on the upstream side of the pressure control valve PV and an urging force of a spring EVs are exerted in a valve opening direction and a thrust of the solenoid Sol is exerted in a valve closing direction. Thus, in the pressure control valve PV, the valve opening pressure of the extension side main valve MVe and the compression side main valve MVc can be changed by adjusting the thrust of the solenoid Sol. That is, it is possible to control the valve opening pressure of the extension side main valve MVe and the compression side main valve MVc by adjusting the valve opening pressure of the pressure control valve PV and adjusting the back pressure applied to the extension side main valve MVe and the compression side main valve MVc. Additionally, when a current is not supplied to the solenoid Sol, the pressure control passage PP sets the passage to maximum by the spring EVs.

Meanwhile, the opening and closing valve SV integrated with the pressure control valve PV is disposed on the upstream side of the pressure control valve PV. The opening and closing valve SV is disposed at a position on the downstream side of the throttle O of the pressure control passage PP and the upstream side of the pressure control valve PV. The opening and closing valve SV has an interruption position SVs of interrupting the pressure control passage PP and a communication position SVo of opening the pressure control passage PP and can select the interruption position SVs by the spring EVs shared with the pressure control valve PV. Then, in a state in which a current is normally supplied to the solenoid Sol, the opening and closing valve SV is pressed by the thrust of the solenoid Sol and can select the communication position SVo of opening the pressure control passage PP. Additionally, in a fail state in which no current is supplied to the solenoid Sol or the supply of the current cannot be performed or cannot be performed normally, no current is supplied to the solenoid Sol, but the solenoid Sol is pushed by the spring EVs so that the opening and closing valve SV closes the pressure control passage PP.

Thus, the electromagnetic valve EV can control the pressure using the pressure control valve PV while maintaining the opening and closing valve SV at the communication position SVo by controlling the thrust of the solenoid Sol in a state in which the current can be normally supplied to the solenoid Sol. Then, since the current is not supplied to the solenoid Sol in the fail state, the pressure control valve PV opens the passage to maximum. However, since the opening and closing valve SV is switched to the interruption position SVs, the pressure control passage PP is interrupted.

Then, since the pressure on the downstream side of the throttle O of the pressure control passage PP and on the upstream side of the opening and closing valve SV is guided as a back pressure to the extension side main valve MVe and the compression side main valve MVc and the pressure on the downstream side of the throttle O of the pressure control passage PP and on the upstream side of the pressure control valve PV is the same as the back pressure guided to the extension side main valve MVe and the compression side main valve MVc in a state in which the opening and closing valve SV opens the pressure control passage PP, it is possible to control the back pressure applied to the extension side main valve MVe and the compression side main valve MVc when the thrust of the solenoid Sol is adjusted in a normal state.

Here, the valve opening pressure of the extension side main valve MVe is determined by the back pressure introduced from the pressure control passage PP and the urging force of the spring MVes urged in the closing direction and the valve opening pressure of the compression side main valve MVc is determined by the back pressure introduced from the pressure control passage PP and the urging force of the spring MVcs urging the compression side main valve MVc in the closing direction.

Thus, in the damping valve V, when the electromagnetic valve EV is normal during the extension operation of the shock absorber D1, it is possible to control the damping force during the extension operation of the shock absorber D1 by adjusting the valve opening pressure of the extension side main valve MVe and the compression side main valve MVc while controlling the back pressure applied to the extension side main valve MVe and the compression side main valve MVc by the pressure control valve PV.

Further, as described above, the fail passage FP is branched between the opening and closing valve SV and the throttle O of the adjustment passage Pc, passes through the downstream side of the electromagnetic valve EV, and bypasses the electromagnetic valve EV and the fail valve FV configured as a relief valve is provided in the course of the fail passage FP. In the fail valve FV, a pressure on the downstream side of the throttle O of the pressure control passage PP is applied in the valve opening direction and an urging force generated by the spring FVs is applied in the valve closing direction. That is, the fail valve FV is configured as the relief valve which is opened when the pressure on the upstream side of the fail valve FV reaches a predetermined valve opening pressure set by the spring FVs.

Thus, even when the pressure control passage PP is interrupted by the opening and closing valve SV in the fail state, the fail valve FV exerts the relief function so that the pressure on the downstream side of the throttle O of the pressure control passage PP and on the upstream side of the opening and closing valve SV is controlled at the pressure depending on the passage flow amount and the flow amount characteristic of the fail valve FV. Then, in the fail state, the back pressure guided to the extension side main valve MVe and the compression side main valve MVc is controlled by the fail valve FV and the valve opening pressure of the extension side main valve MVe and the compression side main valve MVc is also controlled at a predetermined pressure.

Additionally, in the case of the damping valve V, the pressure control valve PV and the fail valve FV are disposed in parallel with respect to the pressure control passage PP. For that reason, when the valve opening pressure of the fail valve FV is smaller than the upper-limit pressure controlled by the pressure control valve PV, the fail valve FV is opened even when the back pressure of the extension side main valve MVe and the compression side main valve MVc is controlled at the upper-limit pressure by the pressure control valve PV. In such a setting, the upper limit of the back pressure is limited by the valve opening pressure of the fail valve FV also in a state in which the current given to the solenoid Sol cannot be normally controlled. Thus, the valve opening pressure of the fail valve FV is set to be larger than the upper-limit pressure controlled by the pressure control valve PV.

As described above, the shock absorber D1 can exert a damping force by giving a resistance based on the valve opening pressure controlled by the amount of the current given to the solenoid Sol to the flow of the hydraulic oil passing through the extension side main valve MVe and the compression side main valve MVc when the piston 11 moves in the axial direction corresponding to the down direction of Fig. 1 with respect to the cylinder 10.

Additionally, the structure of the damping valve V is not particularly limited and a configuration in which a resistance is given to the hydraulic oil moving between the extension side chamber R1 and the compression side chamber R2 during the extension of the shock absorber D1 maybe employed. For example, although not illustrated in the drawings, the damping valve V may have a configuration in which the extension side passage of the piston 11 including the extension side passage and the compression side passage communicating the extension side chamber R1 and the compression side chamber R2 is provided with an extension side damping valve which allows only the passage of the hydraulic oil moving from the extension side chamber R1 to the compression side chamber R2 and gives a predetermined resistance to the flow of the hydraulic oil and the compression side passage is provided with a compression side damping valve which allows only the passage of the hydraulic oil moving from the compression side chamber R2 to the extension side chamber R1 and gives a predetermined resistance to the flow of the hydraulic oil. According to this configuration, when the piston 11 moves in the axial direction corresponding to the up direction of Fig. 1 with respect to the cylinder 10, the shock absorber D1 exerts a damping force by giving a resistance to the flow of the hydraulic oil passing through the extension side passage provided in the piston 11 using the extension side damping valve and giving a resistance to the flow of the hydraulic oil passing through the compression side passage provided in the piston 11 using the compression side damping valve.

Further, as illustrated in Fig. 1, the rod 12 includes a hollow portion and a harness H for supplying a current to the solenoid Sol driving the electromagnetic valve EV is inserted through the hollow portion. Then, the lower end of the harness H is connected to the solenoid Sol through a hole (not illustrated) opening to the bottom portion 2b of the housing 2. The upper end of the harness H is not illustrated in the drawings, but may extend outward from the upper end of the rod 12 to be connected to a power supply.

Further, although not illustrated in the drawings, a free piston is slidably inserted into the lower side of the cylinder 10 in Fig. 1 and a gas chamber filled with a gas is formed inside the cylinder 10 by the free piston to be located below the compression side chamber R2 in Fig. 1. Thus, when the total volume of the extension side chamber R1 and the compression side chamber R2 changes when the rod 12 enters and exits the cylinder 10 due to the extension and compression of the shock absorber D1, the free piston moves up and down inside the cylinder 10 to expand or contract the gas chamber and compensates the volume of the rod 12 entering and exiting the cylinder 10. Additionally, in the embodiment, the shock absorber D1 is configured as a single tube type shock absorber. However, the shock absorber may be configured as a dual tube type shock absorber in which an outer tube accommodating the cylinder 10 is provided instead of a gas chamber, a reservoir is formed between the outer tube and the cylinder 10, and a volume of a rod entering and exiting the cylinder 10 is compensated by the reservoir.

### <Second Embodiment>

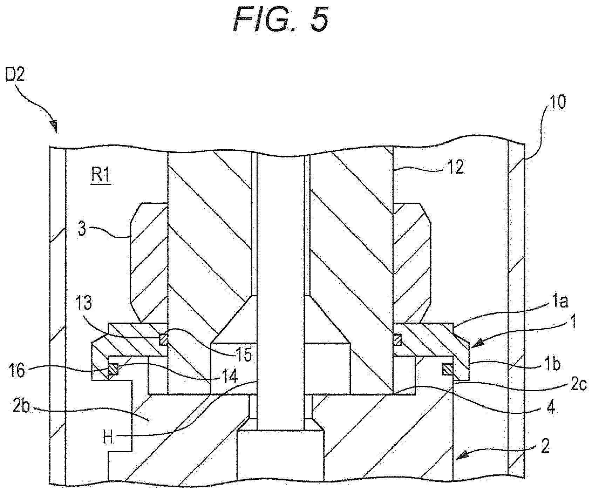

Next, a shock absorber D2 according to a second embodiment will be described. As illustrated in Fig. 5, the shock absorber D2 is different from the shock absorber D1 of the first embodiment in that seal rings 15 and 16 are respectively provided between the rebound stopper 1 (cap) and the outer circumference of the rod 12 and between the rebound stopper 1 and the housing 2 corresponding to the piston connection member.

Here, a difference from the shock absorber D1 according to the first embodiment will be described. Here, the same reference numerals will be given to the same components having the same configuration and a description thereof will be omitted.

The shock absorber D2 according to the embodiment has a configuration in which annular accommodation grooves 13 and 14 are respectively provided in the inner circumference of the small diameter tube portion 1a of the rebound stopper 1 and the upper end portion of the housing 2 facing the large diameter tube portion 1b and the seal rings 15 and 16 are attached to the accommodation grooves 13 and 14. When the rebound stopper 1 is attached in this state, the rebound stopper 1 is attached to the outer circumference of the rod 12 and the housing 2 without a gap.

Additionally, in the embodiment, the accommodation grooves 13 and 14 to which the seal rings 15 and 16 are attached are respectively provided at the small diameter tube portion 1a of the rebound stopper 1 and the upper end portion of the housing 2, but the accommodation grooves 13 and 14 may be provided in the outer circumference of the rod 12 facing the small diameter tube portion 1a or the inner circumference of the large diameter tube portion 1b.

According to the shock absorber D2 of the embodiment, even when the inner diameters of the small diameter tube portion 1a and the large diameter tube portion 1b of the rebound stopper 1 are slightly larger than the outer diameter of the rod 12 and the outer diameter of the upper end of the housing 2, the rebound stopper 1 is attached to the outer circumference of the rod 12 and the housing 2 without a gap by the seal rings 15 and 16 respectively provided between the outer circumference of the rod 12 and the housing 2 and the rebound stopper 1 and the housing.

According to the above-described configuration, even when the inner diameters of the small diameter tube portion 1a and the large diameter tube portion 1b are slightly larger than the diameter of the outer circumference of the rod 12 or the upper end of the housing 2 at the time of manufacturing the rebound stopper 1, the gaps are filled by the seal rings 15 and 16 and hence the joint portion 4 between the rod 12 and the housing 2 is isolated from the extension side chamber R1. For that reason, the oxide scale generated at the joint portion 4 is confined in a space surrounded by the housing 2, the outer circumference of the rod 12, and the rebound stopper 1. That is, since a dimensional tolerance of the inner diameters of the small diameter tube portion 1a and the large diameter tube portion 1b of the rebound stopper 1 increases as compared with a case in which the seal rings 15 and 16 are not provided, defective products are hard to come out and the yield is high.

Further, according to the embodiment, since the joint portion 4 is isolated from the extension side chamber R1 by the seal rings 15 and 16, there is no concern that the outer circumference of the rod 12 may be damaged even when the rebound stopper 1 is formed of metal and hence the selectivity of the material of the rebound stopper 1 is improved.

While the preferred embodiments of the invention have been described in detail, improvements, modifications, and changes can be made without departing from the scope of the claims.

This application claims priority based on Japanese Patent Application No. 2016-086738 filed on April 25, 2016 in Japan Patent Office, the entire contents of which are incorporated herein by reference.

## Claims

1. A shock absorber comprising:
a rod;
a piston connection member that is joined to the rod and is connected to a piston; and
a cap which is attached to an outer circumference of the rod and the piston connection member without a gap and covers a j oint portion between the rod and the piston connection member.

2. The shock absorber according to claim 1,
wherein the cap is formed of resin and is attached to the rod and the piston connection member in a press-inserted state.

3. The shock absorber according to claim 1,
wherein a seal ring is provided between the cap and the rod and between the cap and the piston connection member.

4. The shock absorber according to claim 1,
wherein the piston connection member is a tubular housing which accommodates a damping valve.
